# EUROPÄISCHE PATENTSCHRIFT

(11) **EP 2 794 775 B1**
(45) Veröffentlichungstag und Bekanntmachung des Hinweises auf die Patenterteilung: **21.06.2017**
(21) Anmeldenummer: 12813275.0
(22) Anmeldetag: 18.12.2012
(51) Int. Cl.: C09D 5/22, D21H 21/48, B41M 3/14, B42D 15/00, B42D 25/29

(54) **SICHERHEITSMERKMAL MIT MEHREREN KOMPONENTEN**
SECURITY FEATURE HAVING SEVERAL COMPONENTS
CARACTÉRISTIQUE DE SÉCURITÉ À PLUSIEURS COMPOSANTS

(30) Priorität: 23.12.2011 DE 102011122243
(43) Veröffentlichungstag der Anmeldung: 29.10.2014
(73) Patentinhaber: Giesecke & Devrient GmbH, 81677 München (DE)
(72) Erfinder: GIERING, Thomas, 85614 Kirchseeon (DE); KECHT, Johann, 81677 München (DE); STEINLEIN, Stephan, 80538 München (DE)
(86) Internationale Anmeldenummer: PCT/EP2012/005240
(87) Internationale Veröffentlichungsnummer: WO 2013/091842

(56) Entgegenhaltungen:
- DE-A1- 3 048 734

## Beschreibung

Die Erfindung betrifft ein Sicherheitsmerkmal mit einer lumineszierenden Komponente und einer die lumineszierende Komponente tarnenden Komponente.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente zur Produktsicherung zu verstehen.

Die Absicherung von Wertdokumenten gegen Fälschung mittels Sicherheitsmerkmalen mit einer lumineszierenden Komponente ist bereits seit langem bekannt. Die lumineszierende Komponente wird dabei von Substanzen gebildet, die nachfolgend auch als Luminophore bezeichnet werden, und von mit Übergangsmetallen oder Seltenerdmetallen als lumineszierende Ionen dotierten Wirtsgittern gebildet werden. Solche Ionen haben den Vorteil, dass sie, nach entsprechender Anregung, eine oder mehrere charakteristische schmalbandige Lumineszenzen zeigen, die einen sicheren Nachweis und die Abgrenzung gegenüber anderen Spektren erleichtern. Für die Dotierung wurden auch schon Kombinationen von Übergangsmetallen und/ oder Seltenerdmetallen diskutiert. Solche Substanzen haben den Vorteil, dass, zusätzlich zu den obengenannten Lumineszenzen, sogenannte Energietransferprozesse beobachtet werden, die zu komplizierteren Emissionsspektren führen können. Bei diesen Energietransferprozessen kann ein Ion seine Energie auf ein anderes Ion übertragen und die Spektren können dann aus mehreren schmalbandigen Linien bestehen, die charakteristisch für die beiden Ionen sind.

Die genannten Sicherheitsmerkmale zum Absichern von Wertdokumenten weisen als lumineszierende Komponente einzelne Luminophore auf, deren Emissionen sich hinsichtlich ihrer spektralen und/ oder zeitlichen Eigenschaften unterscheiden. Die Sicherheitsmerkmale werden in verschiedenen Anwendungsformen in und/oder auf Wertdokumente ein- und/oder aufgebracht. Dabei kann für die lumineszierende Komponente auch eine Kombination von Luminophoren verwendet werden. Die Emissionsbanden der verwendeten Luminophore stellen eine Spektralkodierung dar. Mehrere verschiedene Luminophore können zu Systemen kombiniert werden, wobei die einzelnen Systeme unabhängig voneinander sind. Die Emission der verwendeten Luminophore wird auch als Lumineszenz bezeichnet, dies kann Fluoreszenz und/ oder Phosphoreszenz beinhalten.

Es ist auch bekannt, dass die beschriebenen Sicherheitsmerkmale nicht alleine von der lumineszierenden Komponente gebildet werden. Als weitere Komponente weisen manche Sicherheitselemente eine Komponente auf, die zur Tarnung der lumineszierenden Komponente eingesetzt wird. In der DE 30 48 734 A1 wird beispielsweise ein Sicherheitspapier mit die Echtheitsmerkmale schützenden Tarnstoffen beschrieben. Die Tarnstoffe der tarnenden Komponenten entsprechen dabei im Wesentlichen den lumineszierenden Komponenten, d. h. sowohl für die lumineszierende Komponente als auch für die tarnende Komponente werden sehr ähnliche oder gleichartige Wirtsgitter und Dotierstoffe verwendet. Jedoch wird bei der Herstellung der Tarnstoffe für die tarnende Komponente darauf geachtet, dass die Tarnstoffe keine lumineszierenden Eigenschaften aufweisen. Dazu werden beispielsweise Parameter beim Glüh- oder Mahlprozess der tarnenden Komponente im Gegensatz zur Herstellung der lumineszierenden Komponente verändert. Alternativ werden sogenannte Lumineszenzkiller verwendet. Dadurch kann die lumineszierende Komponente mit üblichen analysetechnischen Methoden nicht von der tarnenden Komponente unterschieden werden. Hierdurch wird vor allem die Position der lumineszierenden Komponente verschleiert, da sie mit den üblichen Methoden nicht von der tarnenden Komponente unterschieden werden kann.

Da es sich bei lumineszierender und tarnender Komponente um sehr ähnliche oder sogar gleiche Substanzen handelt, wird keine Tarnung der stofflichen Identität der lumineszierenden Komponente erreicht, da durch die Verwendung der tarnenden Komponente die untersuchbare Materialmenge des Sicherheitsmerkmals im zu sichernden Wertdokument insgesamt erhöht wird, weshalb die Analysierbarkeit des Sicherheitsmerkmals bzw. der lumineszierenden Komponente eher erleichtert als erschwert wird.

Ausgehend von diesem Stand der Technik liegt der Erfindung die Aufgabe zugrunde, ein Sicherheitsmerkmal mit einer lumineszierenden Komponente und einer die lumineszierende Komponente tarnenden Komponente anzugeben, wobei die Analyse von Art und Dotierung eines für die lumineszierende Komponente verwendeten Wirtsgitters verhindert oder zumindest wesentlich erschwert werden soll. Dabei soll eine Tarnung der lumineszierenden Komponente sowohl gegenüber einer Elementaranalyse als auch gegenüber einer Strukturanalyse erreicht werden. Die Identifizierung der lumineszierenden Komponente soll auch für den Fall erschwert werden, dass das Sicherheitsmerkmal in reiner Form vor Einbringung in Wertdokumente oder durch Veraschung von echten Wertdokumenten vorliegt, und dann mittels Elementaranalysemethoden wie XRF (Röntgenfluoreszenzanalyse) oder ICP-AES (optische Emissionsspektrometrie mit induktiv gekoppeltem Plasma) oder Strukturanalysemethoden wie Röntgenpulverdiffraktometrie untersucht werden kann.

Die Lösung dieser Aufgabe ergibt sich aus den unabhängigen Ansprüchen. Weiterbildungen sind Gegenstand der Unteransprüche.

Die Erfindung geht von einem Sicherheitsmerkmal mit einer lumineszierenden Komponente mit mindestens einem Luminophor, bestehend aus einem dotierten Wirtsgitter, und einer die lumineszierende Komponente tarnenden Komponente aus, bei dem die tarnende Komponente mindestens zwei Substanzen aufweist, wobei die erste Substanz der tarnenden Komponente ein Röntgendiffraktogramm aufweist, welches das Röntgendiffraktogramm der lumineszierenden Komponente verdeckt, und die zweite Substanz der tarnenden Komponente mindestens ein kationisches Element der lumineszierenden Komponente und mindestens ein kationisches Element der ersten Substanz der tarnenden Komponente aufweist, wobei die lumineszierende Komponente und die erste Substanz der tarnenden Komponente von unterschiedlichen kationischen Elementen gebildet werden.

Die Erfindung weist den Vorteil auf, dass das Auffinden einer ersten Substanz für die tarnende Komponente zur Verdeckung des Röntgendiffraktogramms der lumineszierenden Komponente einfacher möglich ist, wenn für die erste Substanz der tarnenden Komponente und die lumineszierende Komponente unterschiedliche Elemente verwendet werden, weil dadurch eine größere Auswahl an Substanzen für die erste Substanz der tarnenden Komponente zur Verfügung steht. Dadurch wird eine besonders gute Tarnung der Struktur der lumineszierenden Komponente ermöglicht, da eine effektive Tarnung der Struktur nur bei unterschiedlichen, teilweise überlappenden Röntgendiffraktogrammen erhalten wird, nicht jedoch bei vollständiger oder fast vollständiger Überlappung der Röntgendiffraktogramme. Die Verwendung der zweiten Substanz der tarnenden Komponente, die sowohl mindestens ein kationisches Element der lumineszierenden Komponente als auch mindestens ein kationisches Element der ersten Substanz der tarnenden Komponente aufweist, erlaubt eine Verschränkung der lumineszierenden Komponente mit der ersten Substanz der tarnenden Komponente, wodurch eine Bestimmung der Einzelkomponenten und damit insbesondere der lumineszierenden Komponente unmöglich oder zumindest wesentlich erschwert wird.

Weitere Vorteile der vorliegenden Erfindung ergeben sich aus den abhängigen Ansprüchen sowie der nachfolgenden Beschreibung von Ausführungsformen anhand von Figuren.

Es zeigt:
- Figur 1: eine erste Ausführungsform eines Sicherheitsmerkmals mit einer lumineszierenden Komponente und einer die lumineszierende Komponente tarnenden Komponente, und
- Figur 2: eine zweite Ausführungsform eines Sicherheitsmerkmals mit einer lumineszierenden Komponente, einer die lumineszierende Komponente tarnenden Komponente, einer Produktions- und einer Kodierungskomponente, und
- Figur 3: eine dritte Ausführungsform eines Sicherheitsmerkmals mit einer lumineszierenden Komponente, einer die lumineszierende Komponente tarnenden Komponente, einer Produktions- und einer Kodierungskomponente.

Sicherheitsmerkmale zur Absicherung oder Kennzeichnung von Wertdokumenten mit einer lumineszierenden Komponente, auf Basis von Luminophoren aus mit Übergangsmetallen oder Seltenerdmetallen als lumineszierende Ionen dotierten Wirtsgittern mit spezifischen Eigenschaften in ihrer Emission und/oder Anregung, sind z. B. aus WO 81/03507A1, EP 0 966 504 B1, WO2011/084663A2, DE 198 04 021 A1 und DE 10111116 A1 bekannt. Solche Sicherheitsmerkmale werden entweder direkt in Form eines Pulvers bei der Herstellung von Papier der Papiermasse zugesetzt, bzw. anderen Substratmaterialien von Wertdokumenten, wie Kunststoffen. Alternativ oder zusätzlich wird das Pulver einer Druckfarbe zugefügt, welche dann auf das Substrat der Wertdokumente aufgedruckt wird. Das Sicherheitsmerkmal kann auch in anderen Bestandteilen von Wertdokumenten enthalten sein, z. B. in Fäden, Planchetten, Patches usw., die ihrerseits in Wertdokumente eingebracht oder auf diese aufgebracht sind.

Die pulverförmigen Sicherheitsmerkmale mit lumineszierender Komponente in Form der zuvor genannten Luminophore enthalten zudem eine die lumineszierende Komponente tarnende Komponente. Die tarnende Komponente ist dabei derart gewählt, dass sie bei den eingangs genannten Struktur- und Elementaranalysemethoden zu einer Verdeckung bzw. Tarnung der lumineszierenden Komponente führt. Dazu weist die tarnende Komponente beispielsweise ein Röntgendiffraktogramm auf, das zumindest teilweise mit dem Röntgendiffraktogramm der lumineszierenden Komponente überlappt, wie unten noch genauer ausgeführt werden wird.

Zu diesem Zweck kann für die tarnende Komponente mindestens eine erste Substanz verwendet werden, die nicht stofflich ähnlich oder gleich mit den für die lumineszierende Komponente eingesetzten Substanzen sein muss, d. h. die lumineszierende Komponente und die erste Substanz der tarnenden Komponente müssen nicht ganz oder teilweise die gleichen Elemente aufweisen. Durch die zumindest teilweise Deckungsgleichheit der Röntgendiffraktogramme in signifikanten Peaks von lumineszierender Komponente und erster Substanz der tarnenden Komponente, kann deshalb nicht oder zumindest nur wesentlich erschwert durch gängige Strukturanalysemethoden wie der Röntgenpulverdiffraktometrie auf die im Sicherheitsmerkmal vorhandene lumineszierende Komponente geschlossen werden.

Ziel der Elementaranalyse des Sicherheitsmerkmals ist es, durch quantitative Analyse der Bestandteile des Sicherheitsmerkmals, einen Rückschluss über die Identität der verwendeten Wirtsgitter zu erhalten. Dabei können über Methoden wie z. B. XRF besonders "schwere" Elemente gut detektiert werden. Problematisch ist u. a. die Quantifizierung von Sauerstoff, welcher weder durch XRF noch ICP-AES und ähnlichen Methoden detektiert werden kann. Da der Sauerstoff nach Detektion der anderen Bestandteile des Wirtsgitters üblicherweise den "Rest" der Matrix bildet (z. B. als Oxidion), ist seine Detektion zur Identifizierung des Wirtsgitters jedoch auch nicht unbedingt erforderlich. Wurden die kationischen Bestandteile des Wirtsgitters quantifiziert, können selbst bei Gemischen aus verschiedenen Substanzen über Verhältnisbildung der Bestandteile die enthaltenen Wirtsgitter identifiziert werden. So enthält beispielsweise ein Gemisch aus ZnAl₂O₄ und BaMnO₄ unabhängig vom Mischungsverhältnis der beiden Elemente Zn und Al immer in einem Verhältnis 1:2 sowie Ba und Mn immer in einem Verhältnis 1:1. Es ist somit naheliegend diese Bestandteile jeweils einem Wirtsgitter zuzuweisen wodurch diese identifiziert werden können.

Um ein derartiges Vorgehen zu verhindern bzw. wenigstens zu erschweren, müssen die jeweiligen Komponenten miteinander "verschränkt" werden, unter "verschränken" soll dabei verstanden werden, dass alle zu tarnenden Komponenten bzw. Substanzen mindestens paarweise untereinander jeweils mindestens ein überlappendes chemisches Element aufweisen. Die zu tarnenden Komponenten/Substanzen welche paarweise überlappende Elemente aufweisen beinhalten dabei mindestens die lumineszierende Komponente sowie erste und zweite Substanz der tarnenden Komponente. Zusätzlich können weitere Komponenten/Substanzen wie die Produktionskomponente und/ oder Kodierungskomponente mit den anderen Komponenten/Substanzen überlappende Elemente aufweisen. Der Anteil des jeweiligen chemischen Elements muss dabei in einer ausreichenden Größenordnung vorhanden sein um die Verhältnisbildung aus der elementaren Analyse signifikant zu verzerren. Beispielsweise wird in einem Gemisch aus ZnMn₂O₄ und BaMnO₄ kein korrektes ganzzahliges Verhältnis zwischen den Anteilen an Zn und Mn oder zwischen Ba und Mn gefunden werden, da Mn in beiden Wirtsgittern vorhanden ist, welche die Komponenten bzw. Substanzen bilden. Bevorzugt ist dabei der detektierte Mengenanteil des überlappenden chemischen Elements einer Verbindung gegenüber der reinen Verbindung um mindestens 30%, bevorzugt mindestens 50%, besonders bevorzugt mindestens 100% erhöt. Der Mengenanteil kann auch um mindestens 200% erhöht sein.

Um die "Verschränkung" von lumineszierender Komponente und erster Substanz der tarnenden Komponente zu erreichen, wird in der tarnenden Komponente wenigstens eine zweite Substanz eingesetzt, welche sowohl mindestens ein Element der die lumineszierende Komponente bildenden Substanz als auch mindestens ein Element der die tarnende Komponente bildenden ersten Substanz aufweist, da die Elemente der lumineszierenden Komponente und die Elemente der ersten Substanz der tarnenden Komponente unterschiedlich sind. Unter Element soll dabei ein chemisches Element verstanden werden, welches sowohl in der die lumineszierende Komponente bildenden Substanz als auch in der die tarnende Komponente bildenden zweiten Substanz enthalten ist. Insbesondere soll unter Element oder chemischen Element nicht verstanden werden, dass ein oder mehrere identische Atome Bestandteil von zwei Komponenten oder Substanzen sind. Weist die die lumineszierende Komponente bildende Substanz beispielsweise die Elemente A und B auf, und die erste Substanz der tarnenden Komponente die Elemente C und D, so kann die zweite Substanz der tarnenden Komponente beispielsweise die Elemente A und C, A und D, B und C und/ oder B und D aufweisen, wobei die Elemente A, B, C und D nicht von Sauerstoff oder Wasserstoff gebildet werden. Neben den Elementen A, B, C und D können die Substanzen weitere Elemente aufweisen, insbesondere auch Sauerstoff und/ oder Wasserstoff. Sauerstoff und Wasserstoff sollen aber nicht als Elemente betrachtet werden, die eine Verschränkung der Substanzen im Sinne der vorliegenden Erfindung bewirken. Geeignete Elemente sind besonders kationische Matrixbestandteile, insbesondere Kationen von Metallen, Übergangsmetallen, Halbmetallen und Seltenerden. Elementkationen können durch Hinzunahme von Sauerstoff auch anionische Untergruppen als Matrixbestandteile bilden, die ebenfalls zur Verschränkung geeignet sind. So können beispielsweise Phosphor- und Silizium-Kationen in einer Matrix z. B. in Form von Phosphaten und Silikaten vorliegen. Eine Verschränkung der Substanzen im Sinne der vorliegenden Erfindung kann durch die Hauptgruppenelemente Li, Be, B, Na, Mg, Al, Si, P, S, K, Ca, Ga, Ge, As, Se, Rb, Sr, In, Sn, Sb, Te, Cs, Ba, Tl, Pb, Bi, sowie durch beliebige Elemente der Übergangsmetalle und Seltenen Erden gebildet werden.

Die zuvor beschriebenen Elemente oder chemischen Elemente im Sinne dieser Erfindung werden deshalb alternativ auch als kationische Elemente, kationische Matrixbestandteile, kationische Bestandteile des Wirtsgitters oder Elementkationen bezeichnet. Dadurch soll klar zum Ausdruck gebracht werden, dass insbesondere die chemischen Elemente Sauerstoff und/ oder Wasserstoff nicht als die chemischen Elemente betrachtet werden, die eine Verschränkung der Substanzen im Sinne der vorliegenden Erfindung bewirken.

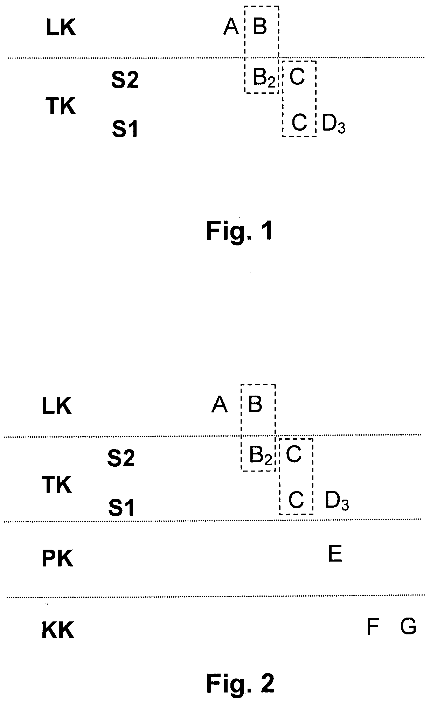

In Figur 1 ist beispielhaft eine lumineszierende Komponente LK dargestellt, bestehend aus je einem Atom der Elemente A und B, eine erste Substanz S1 einer tarnenden Komponente TK, bestehend aus einem Atom des Elements C und drei Atomen des Elements D, sowie eine zweite Substanz S2 der tarnenden Komponente TK, bestehend aus zwei Atomen des Element B und einem Atom des Elements C. Durch die zweite Substanz S2 der tarnenden Komponente TK, welche mit dem Element B ein gemeinsames Element mit der lumineszierenden Komponenten LK, und mit dem Element C ein gemeinsames Element mit der das Röntgendiffraktogramm der lumineszierenden Komponente tarnenden ersten Substanz S1 aufweist, wird die erforderliche "Verschränkung" der Komponenten erreicht.

Im Beispiel von Figur 1 kann A = Yttrium, B = Aluminium, C = Silizium, D = Calcium sein. Die lumineszierende Komponente LK ist dann beispielsweise ein seltenerd-dotierter Yttrium-Perowskit wie YAlO₃:Yb, welcher z. B. bei 975 nm angeregt werden kann und im Bereich von 975 nm-1020 nm emittiert. Die tarnende Komponente besteht beispielsweise aus einer ersten Substanz S1 wie Ca₃SiO₅ und einer zweiten Substanz S2 wie Al₂SiO₅. Der Hauptpeak im Diffraktogramm des Yttrium-Perowskits liegt bei 34.2° (alle Angaben sowie nachfolgende Angaben zu Peakpositionen jeweils in Grad 2Theta). Ein signifikanter Peak (90% des Hauptpeaks) von Ca₃SiO₅ liegt bei 34.3°, wodurch die Röntgendiffraktogramme teilweise überlappen. Durch Zugabe von Al₂SiO₅ wird bei Elementaranalyse der Mischung weder das Y:Al-Verhältnis von 1:1 der lumineszierenden Komponente noch das Ca:Si-Verhältnis von 3:1 der ersten Substanz S1 der tarnenden Komponente erhalten.

Das Sicherheitsmerkmal weist 20% bis 80% der lumineszierenden Komponente auf, bevorzugt 25% bis 60%, besonders bevorzugt 30% bis 50% (alle Angaben sowie nachfolgende Angaben jeweils in Gewichtsprozent). Es handelt sich dabei um einen im nicht-sichtbaren Spektralbereich emittierenden Luminophor, bestehend aus einem dotierten Wirtsgitter. Vorzugsweise besitzen die Luminophore hohe Quantenausbeuten bzw. Signalintensitäten und geeignete Abklingzeiten um selbst bei geringen Einsatzmengen in den Wertdokumenten und hohen Bewegungsgeschwindigkeiten, wie sie beispielsweise in Banknotenbearbeitungsmaschinen mit einer Bearbeitungsgeschwindigkeit von bis zu 40 Banknoten pro Sekunde oder mehr auftreten, eine fehlerfreie Überprüfbarkeit zu gewährleisten. Geeignete Luminophore für die lumineszierende Komponente sind beispielsweise anorganische kristalline Matrizen wie Oxide, z. B. in Form von Granaten, Spinellen, oder Perowskiten, sowie Oxisulfide, Sulfide, Silikate, Phosphate, Aluminate, Niobate, Tantalate, Vanadate, Germanate, Arsenate, Zirkonate oder Wolframate welche mit Seltenerden und/ oder Übergangsmetallen dotiert sind und Abklingzeiten im Bereich zwischen 50 µs und 10 ms besitzen.

Die tarnende Komponente ist in dem Sicherheitsmerkmal zu 20% bis 80%, bevorzugt 30% bis 75%, besonders bevorzugt 40% bis 70% enthalten. Neben der tarnenden Komponente können auch weitere, nicht-tarnende Komponenten im Sicherheitsmerkmal enthalten sein. Die Einsatzmenge der tarnenden Komponente richtet sich unter anderem nach der Menge und relativen Kristallinität der lumineszierenden Komponente. Damit ist gemeint, dass die relative Intensität der ersten Substanz der tarnenden Komponente in einem Röntgendiffraktogramm der Mischung aus tarnender Komponente und lumineszierenden Komponente diese in den überdeckenden Bereichen genügend verdeckt. Zeigt die lumineszierende Komponente z. B. aufgrund einer geringen Korngröße oder eines geringen Anteils in der Mischung nur ein geringes Signal im Röntgendiffraktogramm, bzw. weist die tarnende Komponente aufgrund ihrer hohen Kristallinität oder geeigneten Zusammensetzung ein besonders hohes Signal im Röntgendiffraktogramm auf, so muss von der tarnenden Komponente insgesamt weniger Material eingesetzt werden um die gewünschte Tarnwirkung zu erzielen. Um eine zur Tarnung ausreichende Verzerrung des Röntgendiffraktogramms zu erreichen wird durch die tarnende Komponente im überlappenden Bereich des Röntgendiffraktogramms der lumineszierenden Komponente eine relative Änderung des Flächenintegrals eines überlappenden Peaks der lumineszierenden Komponente von mindestens 20%, bevorzugt mindestens 40%, besonders bevorzugt mindestens 60%, ganz besonders bevorzugt mindestens 80% verursacht. Die tarnende Komponente kann von erster und zweiter Substanz gebildet werden, aber zusätzlich weitere Substanzen enthalten, die ebenfalls elementar verschränkt sein können.

Die tarnende Komponente muss dabei in solcher Menge dem Sicherheitsmerkmal hinzugefügt werden, dass bei Röntgenpulverdiffraktometrie des Sicherheitsmerkmals die jeweiligen Peaks der tarnenden und lumineszierenden Komponente vergleichbar stark sind. Die Röntgendiffraktogramme der tarnenden und der lumineszierenden Komponente dürfen dabei nicht identisch oder stark ähnlich sein, da hierdurch eine Analyse nicht erschwert sondern erleichtert wird. Es sollen also nicht strukturverwandte Substanzen eingesetzt werden. Es ist jedoch ebenfalls nicht vorteilhaft wenn die Peakpositionen beider Röntgendiffraktogramme keine Übereinstimmung zeigen, da hier eine Auftrennung in die Einzelkomponenten besonders einfach ist. Vorzugsweise wird die tarnende Komponente in einer Form eingesetzt, so dass mindestens eine, vorzugsweise zwei, besonders bevorzugt drei relevante Peakpositionen der tarnenden Komponente mit entsprechenden Peakpositionen der lumineszierenden Komponente übereinstimmen. Unter "Übereinstimmen" soll dabei verstanden werden, dass sich die Peakmaxima der beiden Peaks von lumineszierender und tarnender Komponente höchstens um 1°, bevorzugt höchstens um 0,5°, besonders bevorzugt höchstens um 0,2° (2Θ) unterscheiden. Unter "relevant" soll dabei verstanden werden, dass es sich um einen genügend starken Peak handelt, um für die Identifizierung der Substanz bedeutsam zu sein. Vorzugsweise haben die zwei bis drei überlappenden Peaks mindestens 30%, besonders bevorzugt mindestens 50% der Höhe des Hauptpeaks. Besonders bevorzugt ist einer der übereinstimmenden Peaks ein Hauptpeak oder beide Hauptpeaks der die lumineszierende Komponente und die tarnende Komponente bildenden Substanzen. Durch diese teilweise Überlappung wird eine Identifizierung und Trennung der einzelnen Röntgendiffraktogramme erschwert. Dies ist besonders der Fall, wenn die tarnende Komponente mindestens eine Substanz aufweist, deren Röntgendiffraktogramm nicht allgemein bekannt ist, also nicht in gängigen Strukturdatenbanken enthaltenen ist. Neben dem Strukturtyp selbst ist es ebenfalls möglich aus der relativen Höhe einzelner Peaks Rückschlüsse über den Elementgehalt bzw. den Verteilungsgrad von stöchiometrischen oder nichtstöchiometrischen Mischverbindungen zu erhalten. Beispielsweise können viele Strukturen unter Austausch der Elemente an bestimmten Kristallpositionen homogene Mischreihen mit unterschiedlichen Elementen bilden, welche sich in der Struktur, speziell den Dimensionen der Elementarzelle, nur wenig unterscheiden, jedoch anhand ihrer unterschiedlichen relativen Peakhöhen identifiziert werden können. Daher wird als zusätzlicher Vorteil selbst bei erfolgreicher Identifizierung und Trennung der einzelnen Röntgendiffraktogramme durch die lokale Überlappung das genaue relative Verhältnis zwischen einzelnen Peakhöhen verschleiert, so dass hierdurch Rückschlüsse auf die genaue Stöchiometrie der getarnten Matrizen wesentlich erschwert werden.

Um eine derartige Übereinstimmung von bestimmten Peakpositionen der Substanzen von lumineszierender und tarnender Komponente zu erreichen, kann es notwendig sein die Gitterkonstanten der Substanz der tarnenden Komponente gezielt anzupassen. Dies geschieht bevorzugt durch partielle Substitution einer Gitterkomponente durch einen geeigneten Anteil an Atomen mit größerem und/ oder kleinerem Radius. In den Strukturen bestimmter Substanzen ist hierdurch eine stetige Änderung der Gitterparameter erreichbar, z. B. eine Aufweitung des Gitters durch Einbau von Atomen eines größeren Atomradius, wodurch wiederum die Peakpositionen des Röntgendiffraktogramms verschoben werden. Als weiteren Vorteil sind die Peakpositionen solcher teilsubstituierter Substanzen in gängigen Röntgenstrukturdatenbanken oft nur für bestimmte einzelne Substitutionsanteile vorhanden, wodurch eine Analyse weiter erschwert wird. Beispielsweise findet man für eine Substanz A₂SiO₄ bei einer Substitution von A mit B oft die Varianten vollständiger Substitution B₂SiO₄, halber Substitution ABSiO₄, und keiner Substitution A₂SiO₄, jedoch nicht beliebige Verhältnisse z. B. A_{0.21}B_{1.79}SiO₄. Beispielsweise sind die Röntgendiffraktogramme der isostrukturellen Verbindungen Ba₂SiO₄, BaCaSiO₄ und Ca₂SiO₄ bekannt. Die Positionen der beiden stärksten XRD-Peaks sind dabei jeweils 29,4° und 30,4° für Ba₂SiO₄, 30,6° und 31,5° für BaCaSiO₄ und 32,0° und 32,5° für Ca₂SiO₄. Es lassen sich jedoch beliebige Zwischenzustände herstellen um die Positionen der Peaks anzupassen. Hierdurch kann die Überlappung des Röntgendiffraktogramms mit der lumineszierenden Komponente verbessert werden. Gleichzeitig wird das Auffinden der Verbindung durch Benutzen von Röntgenstrukturdatenbanken erschwert.

Ebenso ist es möglich, durch Substitution mit leichteren und/ oder schwereren Atomsorten die relativen Intensitätsverhältnisse der einzelnen Peaks eines Röntgendiffraktogramms stark zu beeinflussen, selbst wenn sich deren Positionen aufgrund gleichbleibender Gitterparameter nicht und nur schwach verändern. In Kombination mit der partiellen Übereinstimmung bestimmter Peaks des Substanzgemischs der lumineszierenden und tarnenden Komponenten lässt sich so ein besonders schwer zu analysierendes Röntgendiffraktogramm generieren.

In seltenen Einzelfällen können erste Substanz und zweite Substanz der tarnenden Komponente identisch sein, das heisst eine Substanz hat sowohl ein nur teilweise überlappendes Röntgendiffraktogramm als auch teilweise gemeinsame Elemente mit der lumineszierenden Komponente. In solchen Fällen ist es möglich die Funktionalität der tarnenden Komponente durch nur eine Substanz abzubilden. Der Einsatz von zwei unterschiedlichen Substanzen für die erste und zweite Substanz der tarnenden Komponente ist jedoch vorteilhaft und daher bevorzugt. Zum einen ist das Auffinden einer einzelnen Substanz welche beide Bedingungen erfüllt schwierig und kann daher nur in seltenen Fällen verwirklicht werden bzw. schlecht auf eine Reihe unterschiedlicher Sicherheitsmerkmale angewandt werden. Zusätzlich ist ein System mit nur einer tarnenden Komponente simpler aufgebaut und daher einfacher zu entschlüsseln.

Bevorzugt besitzen die lumineszierende und die tarnende Komponente zudem eine gleiche oder zumindest ähnliche Dichte, so dass sie nicht leicht z. B. durch Sedimentation getrennt werden können. Bevorzugt beträgt dabei die Abweichung der Dichte der tarnenden Komponente von der Dichte der lumineszierenden Komponente weniger als 50%, besonders bevorzugt weniger als 30%.

Im Folgenden werden Beispiele für Sicherheitsmerkmale bestehend aus lumineszierender Komponente und tarnender Komponente aufgeführt.

### Beispiel 1

Als lumineszierende Komponente wird ein Nd-dotiertes Calciumniobat CaNb₂O₆:Nd eingesetzt, welches durch Glühen einer Mischung von 2,675g CaCO₃, 7,234g Nb₂O₅ und 0,092g Nd₂O₃ für 10h bei 1150°C hergestellt wurde. Bei Anregung bei 532 nm emittiert die lumineszierende Komponente bei 1061 nm. Der Hauptpeak im Röntgendiffraktogramm der lumineszierenden Komponente liegt hier bei 29,2°.

Als erste Substanz der tarnenden Komponente kann monoklines Zr(MoO₄)₂ eingesetzt werden, dessen Hauptpeak bei 29,1° liegt. Als zweite Substanz der tarnenden Komponente kann CaZrO₃ verwendet werden.

Ein Sicherheitsmerkmal aus lumineszierender und tarnender Komponente hat dann beispielsweise die Zusammensetzung:
40% CaNb₂O₆:Nd
30% CaZrO₃
30% Zr(MoO₄)₂

### Beispiel 2

Als lumineszierende Komponente wird ein KY_{0.95}Ho_{0.05}(WO₄)₂ eingesetzt, welches durch Glühen einer Mischung von 6,80g K₂WO₄, 3,00g YCl₃ · 6H₂O und 0,198g HoCl₃·6H₂O für 6h bei 800°C hergestellt wurde. Bei Anregung bei 650 nm emittiert die lumineszierende Komponente bei 2014 nm.
Der Hauptpeak im Diffraktogramm der lumineszierenden Komponente liegt hier bei 28,1°. Als erste Substanz der tarnenden Komponente kann CsSrLa(PO₄)₂ eingesetzt werden, dessen Hauptpeak bei 28,1° liegt. Als zweite Substanz der tarnenden Komponente kann YPO₄ verwendet werden. Ein Sicherheitsmerkmal aus lumineszierender und tarnender Komponente hat dann beispielsweise die Zusammensetzung:
30% KY_{0,95}Ho_{0,05}(WO₄)₂
40% CsSrLa(PO₄)₂
30% YPO₄

### Beispiel 3

Als lumineszierende Komponente wird ein Y_{1,98}Nd_{0,02}SiO₅ eingesetzt, welches durch Mischen von 2,66g Harnstoff, 0,53g SiO₂, 6,72g Y(NO₃)₃ · 6H₂O, 0,08g Nd(NO₃)₃ · 5H₂O und 3mL H₂O, Eindampfen der Flüssigkeit bei 500°C, und Glühen des erhaltenen Materials bei 1500°C für 10h hergestellt wurde. Bei Anregung bei 532 nm emittiert die lumineszierende Komponente bei 1075 nm.

Ein signifikanter Peak (>70% Hauptpeak) im Diffraktogramm liegt bei 22,8°. Als erste Substanz der tarnenden Komponente kann NaTaO₃ verwendet werden, dessen Hauptpeak bei 22,8° liegt. Als zweite Substanz der tarnenden Komponente kann YTaO₃ verwendet werden.

Ein Sicherheitsmerkmal aus lumineszierender und tarnender Komponente hat dann beispielsweise die Zusammensetzung:
35% Y_{1,98}Nd_{0,02}SiO₅
30% NaTaO₃
35% YTaO₃

### Beispiel 4

Als lumineszierende Komponente wird ein KTiO(PO₄):Er eingesetzt, welches durch Glühen einer Mischung von 18,78g KH₂PO₄, 10,90g TiO₂ und 0,61g Er₂O₃ bei 800°C für 12h hergestellt wurde.

Bei Anregung bei 520 nm emittiert die lumineszierende Komponente bei 1540 nm. Der Hauptpeak im Diffraktogramm der lumineszierenden Komponente liegt bei 32,3°, mit einem dicht benachbarten signifikanten Peak (>70% des Hauptpeaks) bei 32,6°. Als erste Substanz der tarnenden Komponente kann LaMnO₃ eingesetzt werden, welches im Diffraktogramm zwei signifikante Peaks (90-100% des Hauptpeaks) bei 32,3° und 32,6° besitzt. Als zweite Substanz der tarnenden Komponente kann LaPO₄ verwendet werden.

Ein Sicherheitsmerkmal aus lumineszierender und tarnender Komponente hat dann beispielsweise die Zusammensetzung:
35% KTiO(PO₄):Er
35% LaMnO₃
30% LaPO₄

### Beispiel 5

Als lumineszierende Komponente wird eine Mischung der Luminophore KTiO(PO₄):Er und CaNb₂O₆:Nd aus den vorherigen Beispielen eingesetzt. Dabei soll die Komponente KTiO(PO₄):Er vertarnt werden. Dazu kann wie im vorherigen Beispiel LaMn03 verwendet werden. Alternativ besitzt KTiO(PO₄):Er auch einen signifikanten Peak (>80% des Hauptpeaks) bei 28,8° sowie einen signifikanten Peak (>30% des Hauptpeaks) bei 25,9°. Als erste Substanz der tarnenden Komponente kann ß-BaSO₄ verwendet werden, welches im Diffraktogramm zwei signifikante Peaks (95-100% des Hauptpeaks) bei 25,9 und 28,8° besitzt. Als zweite Substanz der tarnenden Komponente kann BaTiO₃ verwendet werden.

Ein Sicherheitsmerkmal aus lumineszierender und tarnender Komponente hat dann beispielsweise die Zusammensetzung:
20% KTiO(PO₄):Er
15% CaNb₂O₆:Nd
35% ß-BaSO₄
30% BaTiO₃

Eine alternative Zusammensetzung, bei der zusätzlich die elementare Zusammensetzung des CaNb₂O₆:Nd vertarnt wird, lautet:
20% KTiO(PO₄):Er
15% CaNb₂O₆:Nd
25% ß-BaSO₄
20% BaTiO₃
20% CaTiO₃

Eine alternative Zusammensetzung, die beide Luminophore vertarnt und als zweite Substanzen der tarnenden Komponente Ba₃(PO₄)₂ und LaNbO₃ enthält ist beispielsweise:
20% KTiO(PO₄):Er
15% CaNb₂O₆:Nd
20% ß-BaSO₄
15% CsSrLa(PO₄)₂
15% Ba₃(PO₄)₂
15% LaNbO₃

Durch die Verwendung weiterer Komponenten mit unterschiedlichen Funktionalitäten können zusätzliche vorteilhafte Eigenschaften für das Sicherheitsmerkmal erzielt werden, wobei zusätzlich eine erhöhte Sicherheit gegen Nachahmung erreicht werden kann. Die weiteren Komponenten sowie die lumineszierende Komponente und die tarnende Komponente können dabei in ihrer Menge und elementaren Zusammensetzung sowie zusätzlich in struktureller Hinsicht aufeinander abgestimmt sein.

Als weitere Komponente kann eine Produktionskomponente in dem Sicherheitsmerkmal enthalten sein. Das Sicherheitsmerkmal weist 0-30%, bevorzugt 0-20% der Produktionskomponente auf. Die Produktionskomponente wird verwendet, um eine gleichbleibende Qualität bzw. Signalintensität des Sicherheitsmerkmals bzw. der darin enthaltenen lumineszierenden Komponente zu gewährleisten. Abhängig von Herstellungsbedingungen wie den verwendeten Rohstoffchargen und darin enthaltenen Verunreinigungen, Glühparametern, Mahlparametern etc., kann es zu einer Intensitätsschwankung des Lumineszenzsignals der lumineszierenden Komponente kommen. Um solche Schwankungen auszugleichen, wird die Produktionskomponente dem Sicherheitselement in einem Anteil hinzugefügt, um das Lumineszenzsignal des so erhaltenen Sicherheitselements auf eine vorgegebene Nenngröße einzustellen. Dadurch wird verhindert, dass bei Einsatz des Sicherheitsmerkmals die jeweilige Dosierung bei der Einbringung des Sicherheitsmerkmals in Wertdokumente bei den oben beschriebenen Schwankungen variiert werden muss. Im Gegensatz zur tarnenden Komponente ist der Anteil der Produktionskomponente relativ zur lumineszierenden Komponente variabel, da der erforderliche Anteil der Produktionskomponente am Sicherheitsmerkmal, wie zuvor beschrieben, von den jeweiligen Produktionsbedingungen abhängt.

Es ist nicht zwingend notwendig, jedoch bevorzugt, dass es sich auch bei der Produktionskomponente um eine kristalline Substanz handelt. In diesem Fall ist es weiterhin bevorzugt, dass die Peakpositionen des Röntgendiffraktogramms der Produktionskomponente und der tarnenden bzw. lumineszierenden Komponente zumindest teilweise in der oben beschriebenen Art und Weise überlappen. Hierdurch kann eine Röntgenanalyse zusätzlich erschwert werden.

Zudem kann es vorgesehen sein, auch eine chemische Analyse und Trennung von lumineszierender Komponente, tarnender Komponente und Produktionskomponente zu verhindern oder zumindest zu erschweren. Dazu kann die Produktionskomponente sowohl mindestens ein Element der die lumineszierende Komponente bildenden Substanz und/ oder mindestens ein Element der die tarnende Komponente bildenden Substanzen aufweisen. Ebenso kann die Produktionskomponente eine zweite Substanz aufweisen, welche mindestens ein Element der ersten Komponente der Produktionskomponente und mindestens ein Element der lumineszierenden und/oder tarnenden Komponente aufweist. Weisen die lumineszierende Komponente und tarnende Komponente beispielsweise die oben beschriebenen Elemente A, B, C und D auf, weist die Produktionskomponente mindestens eines der Elemente A, B, C oder D auf. Die Produktionskomponente, kann daneben ein oder mehr weitere Elemente E aufweisen, sowie Sauerstoff und/ oder Wasserstoff.

Werden wie bereits als Beispiel beschrieben YAlO₃:Yb als lumineszierende Komponente, Ca₃SiO₅ als erste Substanz der tarnenden Komponente und Al₂SiO₅ als zweite Substanz der tarnenden Komponente verwendet, so kann als Produktionsausgleich beispielsweise eine Verbindung ohne zusätzliche Tarnwirkung verwendet werden, z. B. Titandioxid. Bevorzugt wird jedoch eine Verbindung mit mindestens einem Element der lumineszierenden oder tarnenden Komponente, z. B. MgAl₂O₄ eingesetzt, da hierdurch eine Elementaranalyse der Mischung zusätzlich erschwert wird. Alternativ kann eine Verbindung wie Mg₂SnO₄ eingesetzt werden, welche einen Hauptpeak im Röntgendiffraktogramm bei 34,4° besitzt und somit mit dem Diffraktogramm der lumineszierenden Komponente überlappt.

### Beispiel 6

Die lumineszierende und tarnende Komponente ist identisch mit Beispiel 1. Als Produktionsausgleich wird CaCO₃ verwendet. Ein Sicherheitsmerkmal aus lumineszierender Komponente, tarnender Komponente und Produktionsausgleich hat dann beispielsweise die Zusammensetzung:
30% CaNb₂O₆:Nd
25% CaZrO₃
25% Zr(MoO₄)₂
20% CaCO₃

### Beispiel 7

Die lumineszierende und tarnende Komponente ist identisch mit Beispiel 2. Als Produktionsausgleich wird Ca₃(PO₄)₂ verwendet. Ein Sicherheitsmerkmal aus lumineszierender Komponente, tarnender Komponente und Produktionsausgleich hat dann beispielsweise die Zusammensetzung:
30% KY_{0,95}Ho_{0,05}(WO₄)₂
30% CsSrLa(PO₄)₂
25% YPO₄
15% Ca₃(PO₄)₂

Eine weitere Komponente des Sicherheitsmerkmals kann von einer Kodierungskompönente gebildet werden. Die Kodierungskomponente ist im Sicherheitsmerkmal zu 0-10%, bevorzugt zu 0,5-5%, besonders bevorzugt zu 1-3% enthalten. Es handelt sich bei der Kodierungskomponente um eine Substanz, die als forensisches Merkmal verwendet wird, durch welche z. B. unterschiedliche Produktionschargen, Lieferungen, Hersteller oder Verarbeiter markiert werden können. Bevorzugt wird die Kodierungskomponente von einem Luminophor gebildet. Der Luminophor muss jedoch nicht wie die lumineszierende Komponente im nichtsichtbaren Spektralbereich emittieren, sondern kann z. B. bevorzugt im sichtbaren Spektralbereich lumineszieren. Da die Kodierungskomponente als forensisches Merkmal ausgelegt ist, muss sie die oben beschriebenen Eigenschaften für die Auswertung bei hoher Transportgeschwindigkeit in Banknotenbearbeitungsmaschinen nicht aufweisen. Es ist jedoch darauf zu achten, dass die Auswertung der lumineszierenden Komponente durch die Kodierungskomponente nicht negativ beeinflusst wird. Vorzugsweise unterscheidet sich die Kodierungskomponente daher in Anregung und Emission möglichst stark von der lumineszierenden Komponente. Die Detektion der Kodierungskomponente kann über forensische Methoden erfolgen, z. B. durch den Einsatz eines Fluoreszenzmikroskops oder Messung mittels eines speziellen Laboraufbaus, wobei im Vergleich zur lumineszierenden Komponente auch deutlich längere Messzeiten (z. B. mehrere Minuten bis Stunden) zur sicheren Detektion notwendig sein können.

Als Kodierungskomponente werden bevorzugt mit Seltenerdmetallen und/oder Übergangsmetallen beladene kollabierte Zeolithstrukturen benutzt, wie sie beispielsweise in DE 100 56 462 A1 beschrieben sind. Diese bieten den Vorteil, dass Zeolithe über Ionenaustausch einfach mit einer Vielzahl von Kationen beladen werden können. Ebenfalls bevorzugt eingesetzt werden mit Seltenerdmetallen und/ oder Übergangsmetallen dotierte Matrizen, welche schmalbandige Spektren im vis-Bereich aufweisen. Bevorzugt werden dabei die im vis-Bereich lumineszierenden dreiwertigen Seltenerdkationen von Praseodym, Samarium, Europium, Terbium, und Dysprosium als Dotierstoffe eingesetzt, und als Matrizen Oxide, z. B. in Form von Granaten, Spinellen, oder Perowskiten, sowie Oxisulfide, Sulfide, Silikate, Phosphate, Aluminate, Niobate, Tantalate, Vanadate, Germanate, Arsenate, Zirkonate oder Wolframate eingesetzt. Beispiele für solche und weitere Substanzen sind in den Schriften US 3,980,887, US 4,014,812, US 3,981,819 und WO 2006/047621 A1 beschrieben. Zusätzlich zum Anregungs- oder Emissionsspektrum kann dabei auch die Lebensdauer der Lumineszenz überprüft werden. Der Anteil an Seltenerdionen und/ oder Übergangsmetallen in der Kodierungskomponente kann dabei so hoch sein, dass er bei Elementaranalyse des Sicherheitsmerkmals mit der Konzentration aus Seltenerdmetallen und/oder Übergangsmetallen der Dotierstoffe der lumineszierenden Komponente vergleichbar ist. Hierdurch wird das Identifizieren der für die lumineszierende Komponente verwendeten Dotierstoffe erschwert. Wie bereits zuvor im Zusammenhang mit den anderen Komponenten ausgeführt, ist es bevorzugt, dass auch die Dotierung von Kodierungskomponente und lumineszierender Komponente mit unterschiedlichen Elementen erfolgt, da ansonsten eine chemische Analyse nicht erschwert, sondern erleichtert wird. Es können auch weitere, an der Lumineszenz nicht beteiligte Kationen in die Zeolithstruktur oder das Luminophor-Matrixmaterial eingebettet werden, um die elementare Zusammensetzung der Kodierungskomponente zu beeinflussen.

Neben der Kodierungskomponente können auch der Produktionskomponente und/ oder der tarnenden Komponente und/ oder anderen Komponenten Seltenerdmetalle und/ oder Übergangsmetalle zugesetzt werden, um den Dotierstoff der lumineszierenden Komponente zusätzlich zu schützen. Die Mengen an Seltenerdmetallen und/ oder Übergangsmetallen werden dabei wie zuvor im Zusammenhang mit der Kodierungskomponente beschrieben, d. h. die Menge zugesetzter Seltenerdmetalle und/oder Übergangsmetalle ist vergleichbar mit der Menge der Dotierstoffe der lumineszierenden Komponente. Vergleichbar soll dabei bedeuten, dass die molare Menge des Zusatzes mindestens 30% der molaren Menge des Dotierstoffes der lumineszierenden Komponente beträgt. Die Seltenerdmetalle können dabei fest in das Gitter der jeweiligen Komponente eingebaut sein, oder auch, z. B. falls sich ein direkter Einbau in die Matrix der jeweiligen Komponente als technisch nachteilig erweist oder schwierig ist, bevorzugt als zusätzlicher separater Stoff der Komponente zugemischt sein. Beispielsweise kann die Produktionskomponente oder eine andere Komponente aus einer Mischung eines Stoffes ohne Seltenerdgehalt und eines seltenerdhaltigen Stoffes bestehen. Wird ein separater seltenerdhaltiger Stoff eingesetzt, beträgt sein Anteil an der Gesamtmischung bevorzugt 0,5-4%, besonders bevorzugt 1-2%.

Neben der Produktions- und Kodierungskomponenten können dem Sicherheitsmerkmal weitere funktionale Komponenten zugesetzt sein, welche dabei ebenfalls nicht notwendigerweise eine tarnende Wirkung beinhalten müssen. Beispiele für solche zusätzlichen Komponenten wären z. B. Farbstoffe zur Anpassung der Farbe des Sicherheitsmerkmals, Lumineszenzsabsorber welche ungewollte sichtbare Fluoreszenzen des Sicherheitsmerkmals unterdrücken, Fließmittel um die Rheologie eines das Sicherheitsmerkmal bildenden Pulvers einzustellen oder reine Zusätze von Seltenerd- und/oder Übergangsmetallverbindungen zum Schutz der Identität der eingesetzten Dotierstoffe.

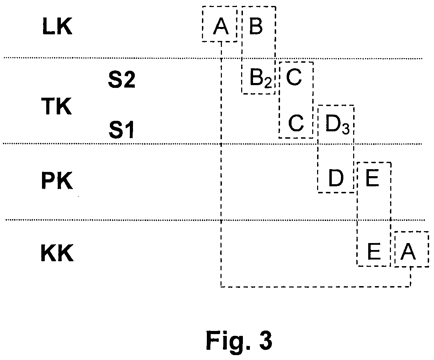

Für ein Sicherheitsmerkmal mit fünf unterschiedlichen Wirtsgittern, gebildet aus Atomen der Nicht-Sauerstoff-Elemente A, B, C, D und E kann eine elementare Verschränkung nur der lumineszierenden und der tarnenden Komponente beispielsweise wie in Figur 2 vorgenommen werden, und eine elementare Verschränkung aller Komponenten beispielsweise wie in Figur 3 vorgenommen werden.

Das Sicherheitsmerkmal nach Figur 2 mit A=Y, B=Al, C=Si, D=Ca, E=Ti, F=Gd, G=B kann z. B. aus 35% lumineszierender Komponente LK (z. B. YAlO₃:Yb), 45% tarnender Komponente TK, mit 20% der ersten Substanz S1 (z. B. Ca₃SiO₅)und 25% der zweiten Substanz S2 (z. B. Al₂SiO₅),18% der Produktionskomponente PK (z. B. TiO₂) und 2% der Kodierungskomponente KK (z. B. GdBO₃:Tb) bestehen. Bei elementarer Analyse dieses Gemischs und Bestimmung der relativen Anteile an A, B, C, D und E ist es nicht möglich z. B. aus dem relativen Verhältnis von A zu B, im Beispiel das Verhältnis von Y zu Al, einen Rückschluss auf die Identität der lumineszierenden Komponente LK zu finden. In der lumineszierenden Komponente beträgt das Verhältnis von Y zu Al genau 1:1, in der die tarnende Komponente enthaltenden Mischung des Sicherheitsmerkmals beträgt das molare Verhältnis von Y zu Al jedoch 1:3,3. Wird bei einer Elementaranalyse ein solches Verhältnis gefunden, wäre es auf den ersten Blick nicht ersichtlich dass Y und Al zusammen eine Matrix bilden, ebenso würde man bei diesem Verhältnis keinen Yttrium-Aluminium-Perowskit als lumineszierende Komponente erwarten. Eine zusätzliche Analyse durch Röntgendiffraktometrie würde aufgrund des geringen Anteils an aus Banknoten extrahierbarem Material bzw. in Banknotenasche enthaltenem Material ein Diffraktogramm sehr schlechter Qualität mit niedrigem Signal-Rausch-Verhältnis und unter Umständen stark verbreiterten Peaks ergeben, z. B. verursacht durch Beschädigung der Kristallstrukturen durch die Chemikalienbehandlung der Extraktion oder den Veraschungsprozess. Durch die Überlappung der Diffraktogramme von YAlO₃ und Ca₃SiO₅ wird das Diffraktogramm von YAlO₃ an relevanten Stellen überdeckt und verfälscht, und so unter Umständen gar nicht erst erkannt. Es ist aber beispielsweise auch möglich, dass bei Überlappung der Hauptpeaks nur z. B. Ca₃SiO₅ als mögliche Phase wahrgenommen wird, da ansonsten kein weiteres starkes Signal erkannt werden kann. Eine Identifizierung der lumineszierenden Komponente ist damit im Vergleich zum Einsatz des Reinstoffs deutlich erschwert worden.

Das Sicherheitsmerkmal nach Figur 3 A=Y, B=Al, C=Si, D=Ca, E=Ta kann z. B. aus 35% lumineszierender Komponente LK (z. B. YAlO₃:Yb), 45% tarnender Komponente TK, mit 20% der ersten Substanz S1 (z. B. Ca₃SiO₅) und 20% der zweiten Substanz S2 (z. B. Al₂SiO₅), 18% der Produktionskomponente PK (z. B. Ca₂Ta₂O₇) und 2% der Kodierungskomponente KK (z. B. YTaO₄:Pr) bestehen. Bei elementarer Analyse dieses Gemischs und Bestimmung der relativen Anteile an A, B, C, D und E ist es wie im Beispiel der Figur 2 nicht möglich z. B. aus dem relativen Verhältnis von A zu B einen Rückschluss auf die Identität der lumineszierenden Komponente LK zu finden. Zusätzlich kann jedoch auch nicht aus dem Ca:Si-Verhältnis auf die erste Substanz der tarnenden Komponente, Ca₃SiO₅ geschlossen werden, wodurch hier eine zusätzliche Unsicherheit bei der Analyse entsteht und eine korrekte Interpretation des Diffraktogramms zusätzlich erschwert wird. Ebenso kann die Kodierungskomponente aufgrund ihres geringen Anteils an der Gesamtmischung neben den deutlich höheren Anteilen an Yttrium bzw. Tantal aus den anderen Komponenten nicht isoliert werden, ihre Existenz bzw. genaue Zusammensetzung wird somit von den gemeinsamen Elementen der anderen Komponenten "überdeckt".

### Beispiel 8

Die lumineszierende und tarnende Komponente ist identisch mit Beispiel 3. Als Produktionsausgleich wird CaCO₃ verwendet. Zur Tarnung der Dotierstoffe werden Er₂O₃ und Dy₂O₃ verwendet. Als Kodierungskomponente wird CaTa₂O₆:Sm_{0,03} (Emission bei 610 nm) verwendet. Ein Sicherheitsmerkmal aus lumineszierender Komponente, tarnender Komponente, Produktionsausgleich und Kodierungskomponente hat dann beispielsweise die Zusammensetzung:
33% Y₁,₉₈Nd_{0,02}SiO₅
25% NaTaO₃
25% YTaO₃
10% CaCO₃
5% CaTa₂O₆:Sm_{0,03}
1.5% Er₂O₃
0.5% Dy₂O₃

### Beispiel 9

Die lumineszierende und tarnende Komponente ist identisch mit Beispiel 4. Als Produktionsausgleich wird Ca₃(PO₄)₂ verwendet. Zur Tarnung der Dotierstoffe wird Nd₂O₃ verwendet. Als Kodierungskomponente wird La-OBr:Tb verwendet (Emission bei 543 nm). Ein Sicherheitsmerkmal aus lumineszierender Komponente, tarnender Komponente, Produktionsausgleich und Kodierungskomponente hat dann beispielsweise die Zusammensetzung:
30% KTiO(PO₄):Er
30% LaMnO₃
25% LaPO₄
12% Ca₃(PO₄)₂
2% LaOBr:Tb
1% Nd₂O₃

Es ist zu beachten, dass die in Figuren 1 bis 3 angeführten Elementanzahlen und relativen Stöchiometrien der aus den Elementen A-G zusammengesetzen Verbindungen nur ein Beispiel zur Beschreibung der Erfindung darstellen, und nicht begrenzend wirken sollen.

Es ist auch möglich, dass jeweils mehr als zwei Komponenten bzw. die dafür verwendeten Substanzen gleiche Elemente besitzen, oder mehr als ein Element zwischen zwei Komponenten bzw. Substanzen gleich sind.

Ebenso kann die lumineszierende Komponente mehr als eine lumineszierende Substanz aufweisen, d. h. mehr als einen Luminophor. In diesem Fall sind bevorzugt für jeden Luminophor der lumineszierenden Komponente eine erste und eine zweite Substanz in der tarnenden Komponente vorgesehen. Ist dies z. B. aus technischen Gründen nicht möglich oder mit erhöhtem Aufwand verbunden, kann es ausreichend sein nur einen einzigen Luminophor einer Luminophorkombination zu vertarnen, da üblicherweise alle Luminophore einer Luminophorkombination zur erfolgreichen Nachahmung des Sicherheitsmerkmals identifiziert werden müssen. In solchen Fällen wird bevorzugt nur einer der mehreren Luminophore durch eine erste und zweite Substanz der tarnenden Komponente geschützt.
Falls für die Luminophore ähnliche Substanzen verwendet werden, z. B. gleichartige Matrizen mit unterschiedlichen Dotierstoffen, kann es ausreichend sein, für die ähnlichen Substanzen der lumineszierenden Komponente nur eine erste und eine zweite Substanz in der tarnenden Komponente vorzusehen, um eine Verschränkung mehrerer Luminophore im oben beschriebenen Sinn zu erreichen.

Um die Analyse ausreichend zu erschweren ist es bevorzugt, dass das Sicherheitsmerkmal aus mindestens drei, bevorzugt vier, besonders bevorzugt fünf unterschiedlichen Substanzen besteht, welche sich alle im elementaren Aufbau ihrer Wirtsgitter unterscheiden.

Das Sicherheitsmerkmal kann in den Wertdokumenten dazu verwendet werden, deren Echtheit abzusichern und/ oder eine Kodierung bestimmter Eigenschaften darstellen, beispielsweise einer Währung und/oder Denomination usw., falls es sich bei den Wertdokumenten um Banknoten handelt.

## Patentansprüche

1. Sicherheitsmerkmal mit einer lumineszierenden Komponente mit mindestens einem Luminophor, bestehend aus einem dotierten Wirtsgitter, und einer die lumineszierende Komponente tarnenden Komponente, **dadurch gekennzeichnet, dass** die tarnende Komponente mindestens zwei Substanzen aufweist, wobei die erste Substanz der tarnenden Komponente ein Röntgendiffraktogramm aufweist, welches das Röntgendiffraktogramm der lumineszierenden Komponente verdeckt, und die zweite Substanz der tarnenden Komponente mindestens ein kationisches Element der lumineszierenden Komponente und mindestens ein kationisches Element der ersten Substanz der tarnenden Komponente aufweist, wobei die lumineszierende Komponente und die erste Substanz der tarnenden Komponente von unterschiedlichen kationischen Elementen gebildet werden.

2. Sicherheitsmerkmal nach Anspruch 1, **dadurch gekennzeichnet, dass** das Sicherheitsmerkmal eine Produktionskomponente aufweist, zur Einstellung der Signalintensität der Lumineszenz der lumineszierenden Komponente auf einen vorgebbaren Nennwert.

3. Sicherheitsmerkmal nach Anspruch 2, **dadurch gekennzeichnet, dass** die Produktionskomponente mindestens ein kationisches Element aufweist, wobei das kationische Element Bestandteil wenigstens einer anderen Komponente des Sicherheitsmerkmals ist.

4. Sicherheitsmerkmal nach Anspruch 2, **dadurch gekennzeichnet, dass** die Produktionskomponente mindestens zwei unterschiedliche kationische Elemente aufweist, wobei das erste der zwei unterschiedlichen kationischen Elemente Bestandteil einer ersten anderen Komponente des Sicherheitsmerkmals ist, und das zweite der zwei unterschiedlichen kationischen Elemente Bestandteil einer zweiten anderen Komponente des Sicherheitsmerkmals ist.

5. Sicherheitsmerkmal nach einem der Ansprüche 1 bis 4, **dadurch gekennzeichnet, dass** das Sicherheitsmerkmal eine Kodierungskomponente aufweist, zur forensischen Kennzeichnung des Sicherheitsmerkmals.

6. Sicherheitsmerkmal nach Anspruch 5, **dadurch gekennzeichnet, dass** die Kodierungskomponente mindestens ein kationisches Element aufweist, wobei das kationische Element Bestandteil wenigstens einer anderen Komponente des Sicherheitsmerkmals ist.

7. Sicherheitsmerkmal nach Anspruch 5, **dadurch gekennzeichnet, dass** die Kodierungskomponente mindestens zwei unterschiedliche kationische Elemente aufweist, wobei das erste der zwei unterschiedlichen kationischen Elemente Bestandteil einer ersten anderen Komponente des Sicherheitsmerkmals ist, und das zweite der zwei unterschiedlichen kationischen Elemente Bestandteil einer zweiten anderen Komponente des Sicherheitsmerkmals ist.

8. Sicherheitsmerkmal nach einem der Ansprüche 1 bis 7, **dadurch gekennzeichnet, dass** das Röntgendiffraktogramm der lumineszierenden Komponente und das Röntgendiffraktogramm der ersten Substanz der tarnenden Komponente teilweise überlappend sind.

9. Sicherheitsmerkmal nach Anspruch 8, **dadurch gekennzeichnet, dass** das Röntgendiffraktogramm der lumineszierenden Komponente und das Röntgendiffraktogramm der ersten Substanz der tarnenden Komponente eine teilweise Überlappung in signifikanten Peaks aufweisen, wobei mindestens eine, vorzugsweise zwei, besonders bevorzugt drei relevante Peakpositionen überlappen.

10. Sicherheitsmerkmal nach Anspruch 9, **dadurch gekennzeichnet, dass** die überlappenden Peaks mindestens 30%, bevorzugt mindestens 50% der Höhe eines Hauptpeaks aufweisen.

11. Sicherheitsmerkmal nach Anspruch 9, **dadurch gekennzeichnet, dass** die überlappenden Peaks ein Hauptpeak, bevorzugt beide Hauptpeaks von lumineszierender Komponente und erster Substanz der tarnenden Komponente sind.

12. Sicherheitsmerkmal nach einem der Ansprüche 1 bis 11, **dadurch gekennzeichnet, dass** die Komponenten und Substanzen von oxidischen anorganischen Wirtsgittern oder Matrizen gebildet werden.

13. Sicherheitsmerkmal nach einem der Ansprüche 1 bis 12, **dadurch gekennzeichnet, dass** das Sicherheitsmerkmal 20% bis 80%, bevorzugt 25% bis 60%, besonders bevorzugt 30% bis 50% der lumineszierenden Komponente enthält, und dass das Sicherheitsmerkmal 20% bis 80%, bevorzugt 30% bis 75%, besonders bevorzugt 40% bis 70% der tarnende Komponente enthält, und dass das Sicherheitsmerkmal 0 bis 30%, bevorzugt 0 bis 20% der Produktionskomponente enthält, und dass das Sicherheitsmerkmal 0 bis 10%, bevorzugt 0,5 bis 5%, besonders bevorzugt 1 bis 3% der Kodierungskomponente enthält.

14. Sicherheitsmerkmal nach einem der Ansprüche 1 bis 13, **dadurch gekennzeichnet, dass** die lumineszierende und die tarnende Komponente zudem eine gleiche oder ähnliche Dichte aufweisen, bevorzugt beträgt dabei die Abweichung der Dichte der tarnenden Komponente von der Dichte der lumineszierenden Komponente weniger als 50%, besonders bevorzugt weniger als 30%.

15. Wertdokument mit einem Sicherheitsmerkmal nach einem der Ansprüche 1 bis 14, **dadurch gekennzeichnet, dass** das Wertdokument aus Papier und/ oder Kunststoff besteht.

16. Wertdokument nach Anspruch 15, **dadurch gekennzeichnet, dass** das Sicherheitsmerkmal in das Volumen des Wertdokumentes eingebracht und/ oder auf das Wertdokument aufgebracht ist.

17. Wertdokument nach Anspruch 15 oder 16, **dadurch gekennzeichnet, dass** das Sicherheitsmerkmal als unsichtbare, zumindest teilweise Beschichtung auf das Wertdokument aufgebracht ist.

## Claims

1. A security feature having a luminescent component having at least one luminophore consisting of a doped host lattice, and a component camouflaging the luminescent component, **characterized in that** the camouflaging component has at least two substances, the first substance of the camouflaging component having a X-ray diffractogram which hides the X-ray diffractogram of the luminescent component, and the second substance of the camouflaging component having at least one cationic element of the luminescent component and at least one cationic element of the first substance of the camouflaging component, with the luminescent component and the first substance of the camouflaging component being formed by different cationic elements.

2. The security feature according to claim 1, **characterized in that** the security feature has a production component, for adjusting the signal intensity of the luminescence of the luminescent component to a presettable nominal value.

3. The security feature according to claim 2, **characterized in that** the production component has at least one cationic element, the cationic element being a constituent of at least one other component of the security feature.

4. The security feature according to claim 2, **characterized in that** the production component has at least two different cationic elements, the first of the two different cationic elements being a constituent of a first other component of the security feature, and the second of the two different cationic elements being a constituent of a second other component of the security feature.

5. The security feature according to any of claims 1 to 4, **characterized in that** the security feature has a coding component, for forensically marking the security feature.

6. The security feature according to claim 5, **characterized in that** the coding component has at least one cationic element, the cationic element being a constituent of at least one other component of the security feature.

7. The security feature according to claim 5, **characterized in that** the coding component has at least two different cationic elements, the first of the two different cationic elements being a constituent of a first other component of the security feature, and the second of the two different cationic elements being a constituent of a second other component of the security feature.

8. The security feature according to any of claims 1 to 7, **characterized in that** the X-ray diffractogram of the luminescent component and the X-ray diffractogram of the first substance of the camouflaging component are partly overlapping.

9. The security feature according to claim 8, **characterized in that** the X-ray diffractogram of the luminescent component and the X-ray diffractogram of the first substance of the camouflaging component have a partial overlap in significant peaks, with at least one, preferably two, particularly preferably three, relevant peak positions overlapping.

10. The security feature according to claim 9, **characterized in that** the overlapping peaks have at least 30%, preferably at least 50%, of the height of a main peak.

11. The security feature according to claim 9, **characterized in that** the overlapping peaks are a main peak, preferably both main peaks, of luminescent component and first substance of the camouflaging component.

12. The security feature according to any of claims 1 to 11, **characterized in that** the components and substances are formed by oxidic inorganic host lattices or matrices.

13. The security feature according to any of claims 1 to 12, **characterized in that** the security feature contains 20% to 80%, preferably 25% to 60%, particularly preferably 30% to 50%, of the luminescent component, and that the security feature contains 20% to 80%, preferably 30% to 75%, particularly preferably 40% to 70%, of the camouflaging component, and that the security feature contains 0 to 30%, preferably 0 to 20%, of the production component, and that the security feature contains 0 to 10%, preferably 0.5 to 5%, particularly preferably 1 to 3%, of the coding component.

14. The security feature according to any of claims 1 to 13, **characterized in that** the luminescing component and the camouflaging component moreover have the same or a similar density, with the deviation of the density of the camouflaging component from the density of the luminescent component preferably amounting to less than 50%, particularly preferably less than 30%.

15. A value document having a security feature according to any of claims 1 to 14, **characterized in that** the value document consists of paper and/or plastic.

16. The value document according to claim 15, **characterized in that** the security feature is incorporated into the volume of the value document and/or applied to the value document.

17. The value document according to claim 15 or 16, **characterized in that** the security feature is applied to the value document as an invisible, at least partial coating.

## Revendications

1. Caractéristique de sécurité comprenant un composant luminescent muni d'au moins un luminophore consistant en un réseau hôte dopé, et un composant camouflant le composant luminescent, **caractérisé en ce que** le composant camouflant comporte au moins deux substances, la première substance du composant camouflant présentant un diffractogramme de rayons qui recouvre le diffractogramme de rayons du composant luminescent, et la deuxième substance du composant camouflant présentant au moins un élément cationique du composant luminescent et au moins un élément cationique de la première substance du composant camouflant, le composant luminescent et la première substance du composant camouflant étant constitués par des éléments cationiques différents.

2. Caractéristique de sécurité selon la revendication 1, **caractérisé en ce que** la caractéristique de sécurité comporte un composant de production destiné au réglage de l'intensité de signal de la luminescence du composant luminescent sur une valeur nominale prédéterminable.

3. Caractéristique de sécurité selon la revendication 2, **caractérisé en ce que** le composant de production comporte au moins un élément cationique, l'élément cationique faisant partie d'au moins un autre composant de la caractéristique de sécurité.

4. Caractéristique de sécurité selon la revendication 2, **caractérisé en ce que** le composant de production comporte au moins deux éléments cationiques différents, le premier des deux éléments cationiques différents faisant partie d'un premier autre composant de la caractéristique de sécurité, et le deuxième des deux éléments cationiques différents faisant partie d'un deuxième autre composant de la caractéristique de sécurité.

5. Caractéristique de sécurité selon une des revendications de 1 à 4, **caractérisé en ce que** la caractéristique de sécurité comporte un composant de codification destiné au marquage forensique de la caractéristique de sécurité.

6. Caractéristique de sécurité selon la revendication 5, **caractérisé en ce que** le composant de codification comporte au moins un élément cationique, l'élément cationique faisant partie d'au moins un autre composant de la caractéristique de sécurité.

7. Caractéristique de sécurité selon la revendication 5, **caractérisé en ce que** le composant de codification comporte au moins deux éléments cationiques différents, le premier des deux éléments cationiques différents faisant partie d'un premier autre composant de la caractéristique de sécurité, et le deuxième des deux éléments cationiques différents faisant partie d'un deuxième autre composant de la caractéristique de sécurité.

8. Caractéristique de sécurité selon une des revendications de 1 à 7, **caractérisé en ce que** le diffractogramme de rayons du composant luminescent et le diffractogramme de rayons de la première substance du composant camouflant se chevauchent partiellement.

9. Caractéristique de sécurité selon la revendication 8, **caractérisé en ce que** le diffractogramme de rayons du composant luminescent et le diffractogramme de rayons de la première substance du composant camouflant présentent un chevauchement partiel en des pics significatifs, au moins une , de préférence deux , particulièrement de préférence trois positions de pics importantes se chevauchant.

10. Caractéristique de sécurité selon la revendication 9, **caractérisé en ce que** les pics se chevauchant ont au moins 30 %, de préférence au moins 50 % de la hauteur d'un pic principal.

11. Caractéristique de sécurité selon la revendication 9, **caractérisé en ce que** les pics se chevauchant sont un pic principal, de préférence tous les deux des pic principaux de composants luminescents et première substance des composants camouflants.

12. Caractéristique de sécurité selon une des revendications de 1 à 11, **caractérisé en ce que** les composants et substances sont constitués par des réseaux hôtes ou matrices anorganiques oxydiques.

13. Caractéristique de sécurité selon une des revendications de 1 à 12, **caractérisé en ce que** la caractéristique de sécurité contient entre 20 % et 80 %, de préférence entre 25 % et 60 %, particulièrement de préférence entre 30 % et 50 % des composants luminescents, et **en ce que** la caractéristique de sécurité contient entre 20 % et 80 %, de préférence entre 30 % et 75 %, particulièrement de préférence entre 40 % et 70 % des composants camouflants, et **en ce que** la caractéristique de sécurité contient entre 0 % et 30 %, de préférence entre 0 % et 20 % des composants de production, et **en ce que** la caractéristique de sécurité contient entre 0 % et 10 %, de préférence entre 0,5 % et 5 %, particulièrement de préférence entre 1 % et 3 % des composants de codification.

14. Caractéristique de sécurité selon une des revendications de 1 à 13, **caractérisé en ce que** les composants luminescent et camouflant présentent en outre une densité égale ou similaire, l'écart de la densité du composant camouflant par rapport à la la densité du composant luminescent étant de préférence en l'occurrence inférieur à 50 %, particulièrement de préférence inférieur à 30 %.

15. Document de valeur comportant une caractéristique de sécurité selon une des revendications de 1 à 14, **caractérisé en ce que** le document de valeur consiste en du papier et/ou en de la matière plastique.

16. Document de valeur selon la revendication 15, **caractérisé en ce que** la caractéristique de sécurité est incorporée dans le volume du document de valeur et/ou est appliquée sur le document de valeur.

17. Document de valeur selon la revendication 15 ou 16, **caractérisé en ce que** la caractéristique de sécurité est appliquée sur le document de valeur sous forme de revêtement invisible au moins partiel.
